(19) Europäisches Patentamt
European Patent Office
Office européen des brevets

(11) EP 3 694 082 B1

(12) EUROPEAN PATENT SPECIFICATION

(45) Date of publication and mention
of the grant of the patent:
**09.10.2024 Bulletin 2024/41**

(21) Application number: **18864055.1**

(22) Date of filing: **22.08.2018**

(51) International Patent Classification (IPC):
**H02K 1/276** (2022.01)

(52) Cooperative Patent Classification (CPC):
**H02K 1/276; H02K 1/2766; H02K 21/16;**
H02K 2213/03; Y02T 10/64

(86) International application number:
**PCT/JP2018/030998**

(87) International publication number:
**WO 2019/069573 (11.04.2019 Gazette 2019/15)**

(54) **PERMANENT MAGNET SYNCHRONOUS MACHINE AND ELECTRIC MOTOR VEHICLE EQUIPPED WITH SAME**

PERMANENTMAGNET-SYNCHRONMASCHINE UND ELEKTROMOTORFAHRZEUG DAMIT

MACHINE SYNCHRONE À AIMANTS PERMANENTS ET MOTEUR ÉLECTRIQUE ÉQUIPÉ DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.10.2017 JP 2017192422**

(43) Date of publication of application:
**12.08.2020 Bulletin 2020/33**

(73) Proprietor: **Hitachi Industrial Products, Ltd.
Tokyo 1010022 (JP)**

(72) Inventors:
• **TAKAHASHI, Akeshi
Tokyo 100-8280 (JP)**
• **ITO, Makoto
Tokyo 100-8280 (JP)**
• **SUGIMOTO, Shinji
Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(56) References cited:
EP-A2- 2 099 114        WO-A1-2014/065102
CN-A- 105 162 301       DE-A1- 102013 223 671
JP-A- 2009 213 256      JP-A- 2011 101 504
JP-A- 2012 115 070      JP-A- 2012 115 070
JP-A- 2017 093 099

• LIANG FANG ET AL: "Rotor saliency improved structural design for cost reduction in single-phase line-start permanent magnet motor", ENERGY CONVERSION CONGRESS AND EXPOSITION, 2009. ECCE. IEEE, IEEE, PISCATAWAY, NJ, USA, 20 September 2009 (2009-09-20), pages 139 - 146, XP031887797, ISBN: 978-1-4244-2893-9, DOI: 10.1109/ECCE.2009.5316318

**Description**

Technical Field

The present invention relates to a permanent magnet synchronous machine and an electric motor vehicle equipped with the same.

Background Art

As for a permanent magnet synchronous machine, an interior permanent magnet (hereinafter called IPM) structure where a permanent magnet is buried in a rotor is widely adopted to realize miniaturization and efficiency enhancement. In the IPM structure, since the ratio (Ld/Lq) of direct-axis inductance Ld to quadrature-axis inductance Lq, so-called salient-pole ratio increases, reluctance torque can be utilized in addition to magnetic torque.

For prior art of a permanent magnet synchronous machine that utilizes reluctance torque, a synchronous machine disclosed in Patent Literature 1 (Japanese Patent Application Laid-Open No. 2015-29421) for example is proposed. This Patent Literature 1 discloses calculation examples of maximum torque when a pole arc degree $\tau m/\tau p$ of a permanent magnet and a magnet hole pole arc degree $\tau g/\tau p$ are changed. The calculation example shown in Fig. 14 in Patent Literature 1 discloses that when $\tau m/\tau p$ is increased, output torque acquired by summing magnetic torque and reluctance torque can be increased. That is, Patent Literature 1 discloses that an increase of magnet volume can increase output torque. Patent Literature 2 (Chinese Patent Application Laid-Open No. 105 162 301 A) describes a high-reluctance torque concentrated winding permanent magnet synchronous motor.

As a further prior art for enhancing output torque by increasing magnet volume, means for arranging permanent magnets per pole in a V shape or U shape for example so as to secure a magnet area and additionally configuring these by plural layers is proposed.

Citation List

Patent Literature

PTL 1: Japanese Patent Application Laid-Open No. 2015-29421

PTL 2: Chinese Patent Application Laid-Open No. 105 162 301 A

Summary of Invention

Technical Problem

As described above, there has been a technique for realizing miniaturization and efficiency enhancement by increasing magnetic torque by means of an increase of magnet volume per pole and by increasing output torque by means of the sum of magnetic torque and reluctance torque.

However, since a permanent magnet is extremely high-priced, compared with other materials, the abovementioned technique of increasing magnet volume has a problem of an increase of a magnet cost. In the meantime, it has been considered that when magnet volume is reduced to reduce a cost, magnetic torque decreases and output torque decreases. Therefore, it has been considered that it is difficult to reduce magnet volume while realizing miniaturization and efficiency enhancement.

An object of the present invention is to solve the abovementioned problem and to provide a permanent magnet synchronous machine with a reduced magnet cost while enhancing output torque and an electric motor vehicle equipped with the same.

Solution to Problem

That the above-mentioned problem has been solved in accordance with the appended claims. In particular, synchronous machine in a permanent magnet includes a stator equipped with a stator coil wound on plural teeth, and a rotor equipped with plural permanent magnets and plural permanent magnet housing holes for housing the permanent magnets in a circumferential direction, the rotor being provided with plural magnetic poles disposed along a peripheral direction, wherein a ratio $\tau m/\tau p$ of an open angle $\tau p$ of the magnetic pole to an open angle $\tau m$ of the permanent magnet satisfies a predetermined expression (1) and a reluctance torque ratio α defined by a predetermined expression (2) using stator coil interlinkage magnetic fluxes Ψp by the permanent magnet, direct-axis inductance Ld, and a quadrature-axis inductance Lq respectively when current I (Arms) is electrified is 0.60 or more. Advantageous Effects of Invention

According to the present invention, the permanent magnet synchronous machine that can reduce a magnet cost while enhancing output torque and an electric motor vehicle equipped with the same can be provided.

A problem, a configuration and effect except the abovementioned will be clarified by description of the following embodiments.

Brief Description of Drawings

Figures 1, 2 and 10 depict certain aspects of the claimed invention, such as the permanent magnet hole extending in the peripheral direction being perpendicular to a magnetic pole central axis. Figure 9 shows an example that is outside the scope of the claimed invention.

Figure 1 is a cross-sectional view showing a stator and a rotor on a cross section perpendicular to a rotating shaft in a permanent magnet synchronous machine according to Example 1 of the present invention.
Figure 2 is an enlarged view showing one magnetic pole in the permanent magnet synchronous machine according to Example 1 of the present invention.
Figure 3 is a vector diagram in the permanent magnet synchronous machine.
Figure 4 is a schematic diagram showing torque characteristics according to Example 1 of the present invention.
Figure 5 is a schematic diagram showing the characteristic of reluctance torque ratio according to Example 1 of the present invention.
Figure 6 shows one example of the torque characteristic according to Example 1 of the present invention.
Figure 7 shows another example showing the torque characteristic according to Example 1 of the present invention.
Figure 8 shows a curve denoting a condition on which output torque is maximum in the permanent magnet synchronous machine according to Example 1 of the present invention.
Figure 9 is a cross-sectional view showing the rotor where the permanent magnet is arranged with the permanent magnet divided in the permanent magnet synchronous machine on the cross section perpendicular to the rotating shaft.
Figure 10 is a cross-sectional view showing a rotor on a cross section perpendicular to a rotating shaft in a permanent magnet synchronous machine according to Example 2 of the present invention.
Figure 11 is a block diagram showing a railroad vehicle using a permanent magnet synchronous machine according to Example 3 of the present invention. Description of Embodiments

Examples of the present invention will be described referring to the drawings below. In the following description, the same reference numeral is allocated to the same configuration. Their names and functions are the same and description of them is omitted.

In addition, the following description is based upon an internal rotation type rotor. However, the effect of the present invention is not limited to the internal rotation type rotor, and the present invention can also be applied to an external rotation type rotor having the similar configuration.

Moreover, a stator winding method may also be concentrated winding and may also be distributed winding. In addition, the number of poles of a rotor and the number of phases of a stator coil are not limited to configurations of the examples. Further, the following description is based upon a permanent magnet motor driven by an inverter. However, effect of the present invention can also be applied to a self-starting type permanent magnet motor.

<Example 1>

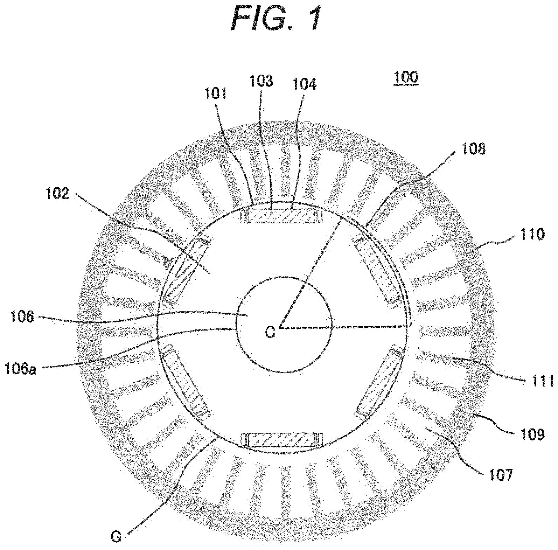

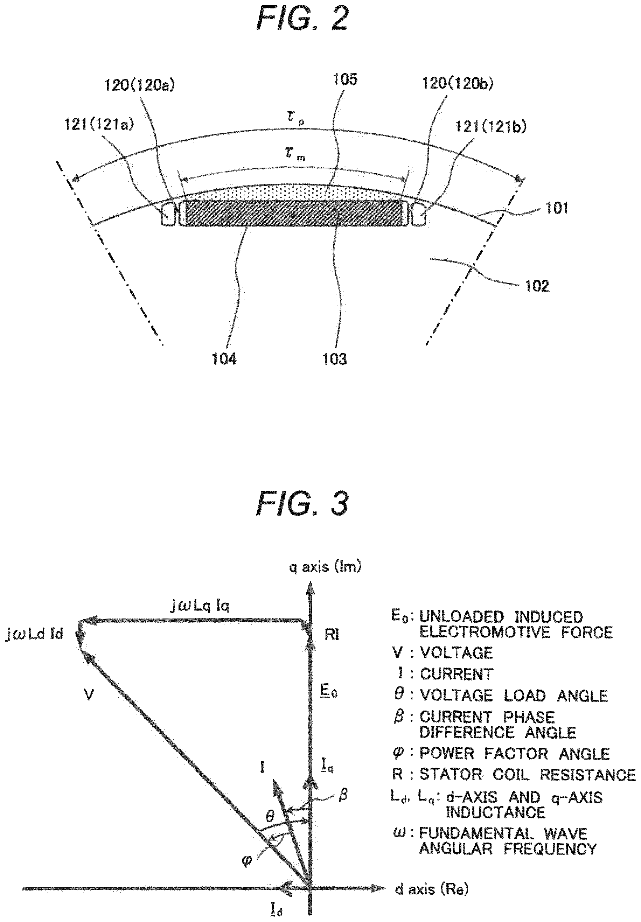

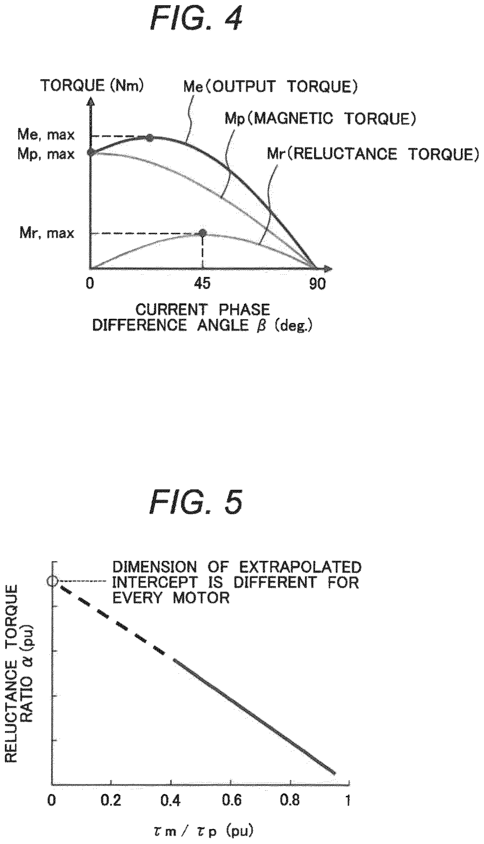

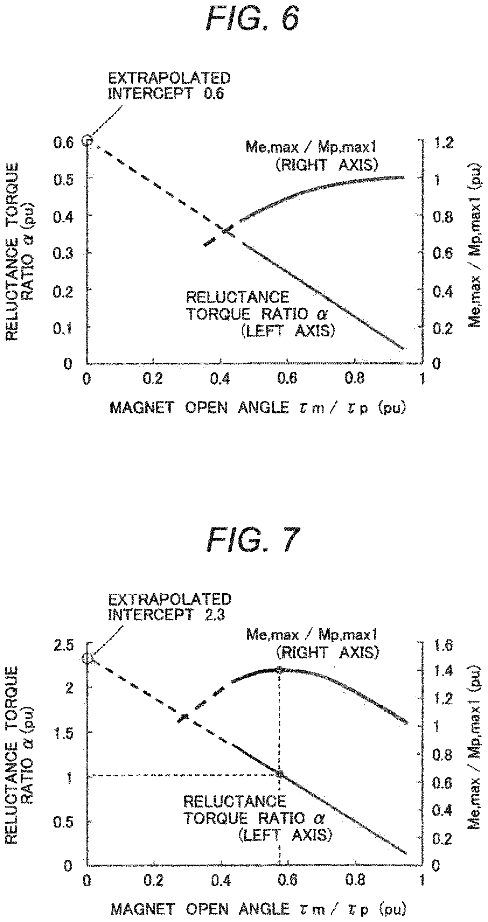

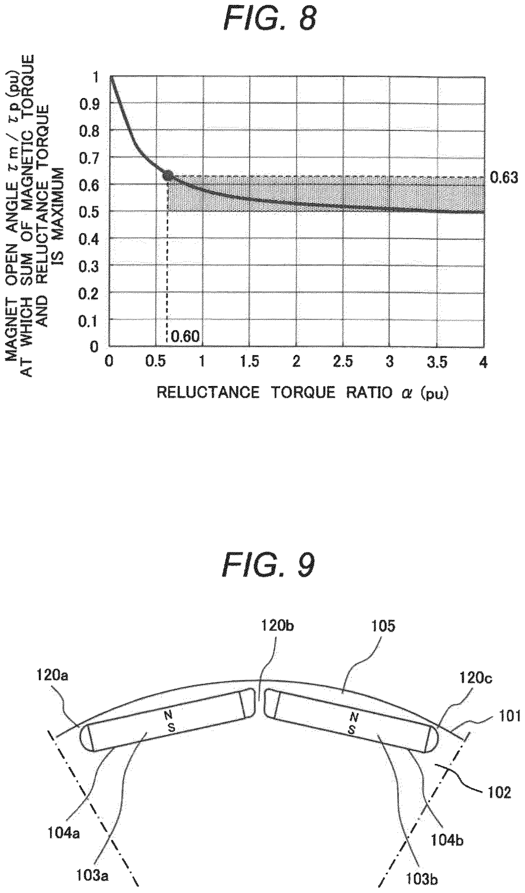

Referring to Figs. 1 to 8, Example 1 of the present invention will be described below. Fig. 1 shows a stator and a rotor on a cross section perpendicular to a rotating shaft in a permanent magnet synchronous machine according to Example 1 of the present invention. Fig. 2 is an enlarged view showing one magnetic pole in the permanent magnet synchronous machine according to Example 1 of the present invention. Fig. 3 is a vector diagram in the permanent magnet synchronous machine. Fig. 4 is a schematic diagram showing torque characteristics according to Example 1 of the present invention. Fig. 5 is a schematic diagram showing a characteristic of a reluctance torque ratio according to Example 1 of the present invention. Figs. 6, 7 show each one example of torque characteristics according to Example 1 of the present invention. Fig. 8 shows a curve denoting a condition on which output torque is maximum in the permanent magnet synchronous machine according to Example 1 of the present invention.

A permanent magnet synchronous machine 100 according to this example will be described referring to Fig. 1 below. The permanent magnet synchronous machine according to this example is provided with a rotor 101 inside a stator 109. A gap G is provided between the rotor 101 and the stator 109. The rotor 101 is rotatably held by a bearing (not shown).

The stator 109 is configured by a stator core 110 and a stator coil (not shown) wound on plural teeth 111. The stator coil is housed in plural stator slots 107.

The rotor 101 is configured by a rotor core 102 equipped with permanent magnet housing holes 104 and permanent magnets 103 respectively arranged to configure six poles (a polar logarithm p = 3). A through hole 106a which the rotating shaft 106 (the rotating shaft, an output shaft) pierces is formed in the center C of the rotor 101 and the rotating shaft 106 is inserted into the through hole 106a.

The permanent magnet housing hole 104 is a rectangular parallelepiped and the permanent magnet 103 is buried in the permanent magnet housing hole 104. Plural pairs of the permanent magnet 103 and the permanent magnet housing hole 104 are provided in a circumferential direction on the basis of a rotation axis of the rotor, and the plural magnetic poles 108 are configured along the circumferential direction inside the rotor 101. The magnetic pole 108 has an open angle of 60° at a mechanical angle.

Fig. 2 is an enlarged view showing one magnetic pole 108. The open angle of the magnetic pole 108 shall be τp and an open angle of the permanent magnet 103 in the magnetic pole 108 shall be τm. The open angle τm of the permanent magnet 103 is configured by lines tying both ends on the outsides in a diametric direction of the permanent magnet 103 and the center of the rotating shaft 106. Ribs 120 (120a, 120b) and flux barriers 121 (121a, 121b) are provided at both ends in the circumferential direction of the permanent magnet housing hole 104. The ribs 120 (120a, 120b) and the flux barriers 121 (121a, 121b) inhibit fluxes of the permanent magnet 103 from forming a short-circuit loop in the same magnetic pole and prevent the permanent magnet 103 from being scattered in rotation of the rotor 101.

In a sectional view shown in Fig. 2, cross-section area of a core peripheral part 105 configured by outer sides in the diametric direction of the permanent magnet 103 and a peripheral end of the rotor 101 and cut by the open angle τm of the permanent magnet is configured so that the cross-section area is smaller than cross-section area of the permanent magnet housing hole 104. This reason will be described later.

A basic principle of the present invention, that is, a principle that enables reducing a magnet cost while maximizing output torque by making ratio τm/τp of the open angle τp of the magnetic pole to the open angle τm of the permanent magnet in the open angle τp of the magnetic pole satisfy relation in an expression (1) and by configuring so that reluctance torque ratio α defined in an expression (a mathematical expression 2) is 0.60 or more using stator coil interlinkage magnetic fluxes Ψp by the permanent magnet, direct-axis inductance Ld, and quadrature-axis inductance Lq respectively when current I (Arms) flows, will be described below.

[Mathematical expression 1]

$$0.5 \leq \frac{\tau_m}{\tau_p} \leq 0.63 \qquad \cdots (1)$$

[Mathematical expression 2]

$$\alpha = \frac{L_q - L_d}{\Psi_p} \cdot \frac{I_{rms}}{\sqrt{2}} \qquad \cdots (2)$$

Generally, output torque Me is expressed by an expression (3) using the polar logarithm p, interlinkage magnetic fluxes Tp for one phase of the stator coil by the permanent magnet, direct-axis current Id, and the quadrature-axis current Iq.

[Mathematical expression 3]

$$M_e = \frac{3}{2} \cdot p \cdot \left\{ \Psi_p \cdot I_q + (L_q - L_d) \cdot (-I_d) \cdot I_q \right\} \qquad \cdots (3)$$

However, Id, Iq and Ψp are a wave height value.

Each parameter configuring the expression (3) can be uniquely calculated as described below if conditions for driving a motor are defined.

First, the interlinkage magnetic fluxes Ψp for one phase of the stator coil can be acquired by driving the rotor 101 by an external device in a state in which a power supply terminal of the stator coil is open and measuring a phase voltage wave height value E0 or a line voltage wave height value E0 x √3 at that time. Concretely, the abovementioned interlinkage magnetic fluxes are acquired by acquiring an angular frequency ω[rad/s] when the rotor is driven at the number of revolutions N [min-1] per minute by an external device from an expression (4) and substituting its result in an expression (5). However, p denotes a logarithm of magnetic pole pairs.

[Mathematical expression 4]

$$\omega = 2\pi \cdot \frac{N}{60} \cdot p \qquad \cdots (4)$$

[Mathematical expression 5]

$$\Psi_p = \frac{E_0}{\omega} \qquad \cdots (5)$$

For the direct-axis inductance Ld and the quadrature-axis inductance Lq, a method of calculating them using a rotor standstill method such as Dalton-Cameron Method or a method of calculating back using a vector diagram shown in Fig. 3 can be given.

In the vector diagram using a system of d-axis and q-axis coordinates shown in Fig. 3, induced electromotive force E0 being a derivative with respect to time of Ψp is generated on the q-axis the phase of which advances by 90° from the d-axis based upon a phase of the interlinkage magnetic fluxes Ψp for one phase of the stator coil by the permanent magnet. When phase voltage V applied to the motor and phase current I that electrifies the motor have each phase difference θ, β with E0, V and I can be analyzed into a di-axis component and a q-axis component as shown in an expression (6) and an expression (7).

[Mathematical expression 6]

$$\begin{aligned} V_d &= -V \cdot \sin\theta \\ V_q &= V \cdot \cos\theta \end{aligned} \qquad \cdots (6)$$

[Mathematical expression 7]

$$\begin{aligned} I_d &= -I \cdot \sin\beta \\ I_q &= I \cdot \cos\beta \end{aligned} \qquad \cdots (7)$$

Resistance R shown in Fig. 3 can be measured by using a resistance measuring instrument such as Wheatstone bridge. In addition, a voltage phase difference angle θ and a current phase difference angle β can be acquired by acquiring waveforms of E0, V, I and estimating phase relation among respective fundamental wave components. Fig. 3 shows a case where waveforms of phase voltage and phase current are used. However, for example, even if line voltage is acquired in place of phase voltage, θ and β can be similarly acquired by considering phase difference between phase voltage and line voltage.

The direct-axis inductance Ld and the quadrature-axis inductance Lq can be acquired from a voltage equation in an expression (8) using physical values acquired above.

[Mathematical expression 8]

$$\begin{aligned} V_d &= R \cdot I_d - \omega \cdot L_q \cdot I_q \\ V_q &= R \cdot I_q + \omega \cdot L_d \cdot I_d + E_0 \end{aligned} \qquad \cdots (8)$$

To explain components in the output torque Me referring to the expression (3) again, a first term in {} denotes magnetic torque and a second term denotes reluctance torque.

As shown in Fig. 4, magnetic torque is maximum when the current phase difference angle β is zero (0), and its maximum value Mp, max is expressed by an expression (9) on the basis of the expression (7).

[Mathematical expression 9]

$$M_{p,\max} = \frac{3}{2} \cdot p \cdot \Psi_p \cdot I \quad \cdots (9)$$

In the meantime, reluctance torque is maximum when the current phase difference angle β is n/4 (45 deg. at an electrical angle), and its maximum value Mr, max can be expressed by an expression (10) on the basis of the expression (7).

[Mathematical expression 10]

$$M_{r,\max} = \frac{3}{2} \cdot p \cdot (L_q - L_d) \cdot \left(\frac{I}{\sqrt{2}}\right)^2 \quad \cdots (10)$$

Ratio of the abovementioned expressions (9), (10) is defined as reluctance torque ratio α. A case where a current wave height value I is used is as follows.

[Mathematical expression 11]

$$\alpha = \frac{M_{r,\max}}{M_{p,\max}} = \frac{L_q - L_d}{\Psi_p} \cdot \frac{I}{2} \quad \cdots (11)$$

A case where a current effective value Irms is used is as follows.

[Mathematical expression 12]

$$\alpha = \frac{M_{r,\max}}{M_{p,\max}} = \frac{L_q - L_d}{\Psi_p} \cdot \frac{I_{rms}}{\sqrt{2}} \quad \cdots (12)$$

In this example, the expression (12) using the current effective value Irms is used.

As clear from the expression (12), the reluctance torque ratio α can be calculated from parameters (Irms, Ψp, Ld, Lq) uniquely defined on the basis of motor driving conditions.

In this case, the output torque Me can be expressed by the following expression as a function of Mp, max, α, β on the basis of characteristics shown in Fig. 4.

[Mathematical expression 13]

$$M_p = M_{p,\max} \cdot \cos\beta \quad \cdots (13)$$

[Mathematical expression 14]

$$M_r = \alpha \cdot M_{p,\max} \cdot \sin 2\beta \quad \cdots (14)$$

[Mathematical expression 15]

$$M_e = M_p + M_r = M_{p,\max} \cdot \cos\beta \cdot (1 + 2\alpha \cdot \sin\beta) \qquad \cdots (15)$$

β when it satisfies an expression (16) in the expression (15) shall be β1.
[Mathematical expression 16]

$$\frac{dM_e}{d\beta} = 0 \qquad \cdots (16)$$

Maximum torque Me, max at that time can be expressed by an expression (17).
[Mathematical expression 17]

$$M_{e,\max} = M_{p,\max} \cdot \cos\beta_1 \cdot (1 + 2\alpha \cdot \sin\beta_1) \qquad \cdots (17)$$

[Mathematical expression 18]

$$\sin\beta_1 = \frac{-1 + \sqrt{1 + 32\alpha^2}}{8\alpha} \qquad \cdots (18)$$

[Mathematical expression 19]

$$\cos\beta_1 = \sqrt{1 - \sin^2\beta_1} \qquad \cdots (19)$$

In the motor having the configuration shown in Figs. 1, 2, magnetic torque when the open angle τm of the permanent magnet is equal to the open angle τp of the magnetic pole (τm = τp) shall be Mp, maxi. At this time, when only the open angle τm of the permanent magnet is changed without changing stator size, rotor size and the other design specifications, the magnetic torque Mp, max can be expressed as shown in an expression (20) as a function of the open angle im of the permanent magnet.
[Mathematical expression 20]

$$M_{p,\max} = M_{p,\max 1} \cdot \sin\left(\frac{\pi}{2} \cdot \frac{\tau_m}{\tau_p}\right) \qquad \cdots (20)$$

To reduce magnet volume and a magnet cost, it is effective to reduce the open angle τm of the permanent magnet. However, as clear from the expression (20), since the magnetic torque Mp, max is deteriorated when the open angle τm of the permanent magnet is reduced, the output torque Me, max acquired from the expression (17) is also deteriorated. Accordingly, it has heretofore been considered to be difficult to maximize output torque and reduce a magnet cost by reducing magnet volume.
In the meantime, the inventors thought that the following expression could be expressed as follows by assigning the expression (20) to the expression (17).
[Mathematical expression 21]

$$M_{e,\max} = M_{p,\max 1} \cdot \sin\left(\frac{\pi}{2} \cdot \frac{\tau_m}{\tau_p}\right) \cdot \cos\beta_1 \cdot (1 + 2\alpha \cdot \sin\beta_1) \qquad \cdots (21)$$

Further, the inventors paid attention to the point that the following expression was acquired when the expression (21) was transformed.

[Mathematical expression 22]

$$\frac{M_{e,max}}{M_{p,max1}} = \sin\left(\frac{\pi}{2} \cdot \frac{\tau_m}{\tau_p}\right) \cdot \cos\beta_1 \cdot (1 + 2\alpha \cdot \sin\beta_1) \quad \cdots (22)$$

The expression (22) is an expression expressing the ratio of the output torque Me, max when only the open angle τm of the permanent magnet is changed without changing stator size, rotor size and the other design specifications to the magnetic torque Mp, maxi when τm = τp. It is known that when only the open angle τm of the permanent magnet is reduced, a sin term (sin(π/2·τm/τp)) on the right side is monotonously reduced as described above. In the meantime, the inventors thought that the reluctance torque ratio α similarly included on the right side showed another trend.

Then, the inventors selected arbitrary combination of Irms, Ψp, Ld, Lq in the motor having the configuration shown in Figs. 1, 2 and researched the relation between τm/τp and the reluctance torque ratio α. As a result, as shown in Fig. 5, the inventors found that the relation between τm/τp and the reluctance torque ratio α was substantially linear. In addition, the inventors found that a dimension of an intercept when an acquired linear function was extrapolated (hereinafter called an extrapolated intercept) was different for each combination of Irms, Ψp, Ld, Lq, that is, for each motor.

When the reluctance torque ratio α can be expressed as a linear function of τm/τp on the right side of the expression (22), cosβ1 and sinβ1 can also be expressed as the function of τm/τp as clear from the expression (18) and the expression (19). That is, a variable included on the right side of the expression (22) is only τm/τp.

For example, in a motor where the extrapolated intercept shown in Fig. 5 is 0.6, relation between the reluctance torque ratio α and τm/τp is as shown in Fig. 6. At this time, when the ratio of the output torque Me, max to the magnetic torque Mp, max1 is calculated for arbitrary τm/τp in the expression (22), the ration shown in Fig. 6 is acquired. It is found from Fig. 6 that when τm/τp has a numeric value close to 1 (the reluctance torque ratio α has a numeric value close to 0), the output torque Me, max is maximum. This result expresses well-known contents that when the open angle τm of the permanent magnet is reduced, the output torque Me, max is also deteriorated and it has been considered that any motor has a trend shown in Fig. 6.

However, in a motor where the extrapolated intercept shown in Fig. 5 has a numeric value such as 2 or 3, the relation between the reluctance torque ratio α and τm/τp is as shown in Fig. 7. When the ratio of the output torque Me, max to the magnetic torque Mp, max1 is calculated for arbitrary τm/τp in the expression (22) as described above, the relation shown in Fig. 7 is acquired. It is found from Fig. 7 that when τm/τp has a numeric value close to 0.6 (the reluctance torque ratio α has the numeric value close to 1), the output torque Me, max is maximum. That is, it is found that output torque can be maximized, reducing magnet volume and a magnet cost because the open angle τm of the permanent magnet is reduced.

Fig. 8 shows a result acquired by setting the extrapolated intercept to an arbitrary value as shown in Fig. 7 and researching combination of τm/τp and the reluctance torque ratio α when the output torque Me, max is maximum. It is found from Fig. 8 that τm/τp when the output torque Me, max is maximum forms a saturation curve having 0.5 as a lower limit. In addition, it is found that an inflection point of the abovementioned trend that τm/τp decreases is located when the reluctance torque ratio α is 0.60 (when τm/τp is 0.63).

As described above, the inventors found that the output torque Me, max could be maximized while reducing magnet volume by suitably selecting the open angle τm of the permanent magnet and the reluctance torque ratio α in this example.

There has been described the basic principle of the present invention, that is, the principle that the magnet cost can be reduced while maximizing the output torque by setting so that the ratio τm/τp of the open angle τp of the magnetic pole to the open angle τm of the permanent magnet in the magnetic pole satisfies the relation in the expression (1) and by setting the reluctance torque ratio α defined by the mathematical expression 2 to 0.60 or more using the stator coil interlinkage magnetic fluxes Ψp by the permanent magnet, the direct-axis inductance Ld, and the quadrature-axis inductance Lq respectively when the current I(Arms) is electrified.

[Mathematical expression 23]

$$0.5 \leq \frac{\tau_m}{\tau_p} \leq 0.63 \quad \cdots (1)$$

[Mathematical expression 24]

$$\alpha = \frac{L_q - L_d}{\Psi_p} \cdot \frac{I_{rms}}{\sqrt{2}} \qquad \cdots (2)$$

According to Example 1 of the present invention, since the quadrature-axis inductance Lq can be increased, stability of sensorless control can be enhanced.

In addition, according to Example 1, procurement and installation costs of sensors can be reduced by adopting the sensorless control.

Further, according to Example 1, as wiring for a sensor is not required and risk of disconnection is excluded, reliability of a product can be enhanced.

Furthermore, according to Example 1, as a load by centrifugal force can be reduced, reliability for mechanical strength can be enhanced. Simultaneously, since the width of the rib 120 can be reduced, leakage fluxes of the permanent magnet 103 can be reduced and the magnetic torque can be further enhanced.

Furthermore, according to Example 1, since magnet size is reduced, magnetic attraction force in assembling work is reduced and assembly workability can be enhanced. Hereby, time required for assembly can be reduced and a manufacturing cost can be reduced.

In the beginning of this example, it is described that the cross-section area of the core peripheral part 105 configured by the outer sides in the diametric direction of the permanent magnet 103 and the peripheral end of the rotor 101 is made smaller than the cross-section area of the permanent magnet housing hole 104. This reason because this example is based upon a premise that the magnetic flux generation area of the permanent magnet is proportional to the open angle τm of the permanent magnet. In other words, this example is based upon a premise that the width between the outer sides in the diametric direction of the permanent magnet 103 and the width in a circumferential direction of the core peripheral part 105 are substantially similar. This premise is maintained by making the cross-section area of the core peripheral part 105 smaller than that of the magnet insertion hole and at this time, the relation shown in the expression (20) between the open angle τm of the permanent magnet and the magnetic torque Mp, max can be secured.

The permanent magnet 103 may also be integrally configured without being divided for every pole in the circumferential direction and plural divided pieces may also be arranged in the circumferential direction. In addition, the permanent magnet 103 configuring one pole and the permanent magnet housing hole 104 are not limited to one. The permanent magnet 103 configuring one pole is divided in the circumferential direction. It is possible that a permanent magnet housing hole 104 is provided to each divided magnet, and a rib is provided to a boundary between the adjacent housing holes.

In addition, to reduce a load by centrifugal force, the permanent magnet housing hole 104 may also be configured so that the cross-section area of the core peripheral part 105 is as small as possible as shown in Fig. 9. Fig. 9 is a cross-sectional view showing a rotor where a permanent magnet is arranged with the magnet divided of a permanent magnet synchronous machine on a cross section perpendicular to a rotating shaft.

In Fig. 9, a rotor core 102 is equipped with the permanent magnet housing holes 104a, 104b and permanent magnets 103a, 103b are housed in the respective permanent magnet housing holes 104a, 104b. Ribs 120a, 120c are formed at respective one ends in the circumferential direction of the permanent magnet housing holes 104a, 104b. In addition, a rib 102b is formed between the permanent magnet housing holes 104a, 104b. In Fig. 9, the plural permanent magnet housing holes 104 are arranged in the circumferential direction to be convex outside in a radial direction.

Moreover, as for the permanent magnet 103 and the permanent magnet housing hole 104, they may be divided into plural pieces in a direction of the rotating shaft, or they may also be integrally configured without dividing. The permanent magnet 103 may also be arranged with the magnet divided into plural pieces in one permanent magnet housing hole 104.

The rotor core 102 may also be configured by laminated steel sheets laminated in the direction of the shaft, may also be configured by a dust core and others, and may also be configured by amorphous metal and others. It is desirable that a flux barrier 121 is provided in view of effectively utilizing magnetic fluxes of the permanent magnet 103. However, when leakage fluxes can be made sufficiently small, the flux barrier is not necessarily required to be provided.

In this example, a numeric value of the reluctance torque ratio α is specified as 0.60 or more. If this specification is met, a rare earth magnet such as a neodymium magnet may also be used for the permanent magnet 103, a low-residual magnetic flux density and low-coercive force magnet such as a ferrite magnet may also be used, the other magnet may further be used, and plural magnets different in residual magnetic flux density and coercive force may also be combined. As for the neodymium magnet, residual magnetic flux density is generally 0.6 T or more. In the meantime, as for the ferrite magnet, residual magnetic flux density is generally below 0.6 T.

This example enables simultaneously realizing all of miniaturization, enhancement of efficiency and cost reduction for any magnet motor. Especially, from a viewpoint of limit design of a motor, when this example is applied to a motor having residual magnetic flux density of 0.6 T or more, a remarkable effect of miniaturization and efficiency enhancement can be acquired more than a case where this example is applied to a magnet motor having residual magnetic flux density below 0.6 T.

<Example 2>

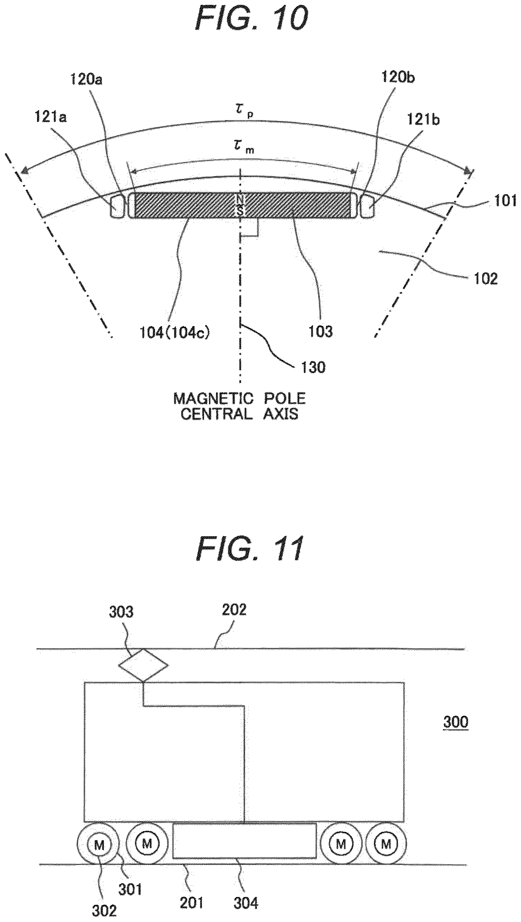

Example 2 of the present invention will be described using Fig. 10 below. Fig. 10 is a cross-sectional view showing a rotor of a permanent magnet synchronous machine according to Example 2 of the present invention on a cross section perpendicular to a rotating shaft.

In Example 2, a rotor core 102 is equipped with a permanent magnet housing hole 104 and a permanent magnet 103 is housed in the permanent magnet housing hole. A rib 120 (120a, 120b) and a flux barrier 121 (121a, 121b) are provided at both ends in a peripheral direction of the permanent magnet housing hole 104.

The permanent magnet housing hole 104 is formed so that one side 104c of the permanent magnet housing hole extended in the peripheral direction is orthogonal with a magnetic pole central axis 130 of the permanent magnet configuring one pole. The permanent magnet 103 housed in the permanent magnet housing hole 104 is formed in a flat plate.

According to Example 2, a molding process of the permanent magnet 103 can be kept to minimum by configuring as described above. In addition, according to Example 2, since a process for inserting the permanent magnet 103 is also facilitated, a manufacturing cost can be inhibited. The permanent magnet 103 may also be inserted with a gap left without completely filling the permanent magnet housing hole 104.

<Example 3>

Example 3 of the present invention will be described using Fig. 11. In Example 3, an example in which the permanent magnet synchronous machine according to Examples 1 and 2 is applied to an electric motor vehicle will be described. As one example of the electric motor vehicle, an example used in a railroad vehicle will be described in Example 3.

Fig. 11 is a block diagram showing the railroad vehicle using a permanent magnet synchronous machine according to Example 3 of the present invention.

The railroad vehicle 300 is provided with plural wheels 301 for traveling on a rail 201, the permanent magnet synchronous machine 302 that drives at least one wheel 301 out of the plural wheels 301, a pantograph 303 that collects electric power from stringing 202, and a power converter 304 that converts electric power collected by the pantograph 303 and supplies ac power to the permanent magnet synchronous machine 302.

The permanent magnet synchronous machine 302 is coupled to an axle of the railroad vehicle 300, and a travel motion of the railroad vehicle 300 is controlled by the permanent magnet synchronous machine 302. Electric ground is connected via a rail 201. Voltage of the stringing 202 may be either of dc or ac. In addition, for a feed method, it is possible that a battery is mounted in the railroad vehicle 300 in place of feed from the stringing 202 and electric power is supplied from the battery.

The technique described in Examples 1 and 2 is applied to the permanent magnet synchronous machine 302 in Example 3.

According to Example 3, a system for driving the railroad vehicle can be miniaturized by mounting the permanent magnet synchronous machine 302 according to Examples 1 and 2 in a railroad vehicle system and simultaneously, the railroad vehicle driving system can be efficiently driven.

In addition, according to Example 3, the railroad vehicle can be lightened and power consumption can be reduced. Further, according to Example 3, the railroad vehicle suitable for high-speed operation can be provided owing to lightening of the railroad vehicle. Furthermore, according to Example 3, a load upon the rail can be inhibited owing to the lightening of the railroad vehicle and maintenance work can be lightened.

The present invention is not limited to the abovementioned examples and various variations are included.

The abovementioned examples have been described in detail to plainly explain the present invention and the present invention is not necessarily limited to the described all configurations.

Reference Signs List

100: permanent magnet synchronous machine, 101: rotor, 102: rotor core, 103: permanent magnet, 103a: permanent magnet, 103b: permanent magnet, 104: permanent magnet housing hole, 104a: permanent magnet housing hole, 104b: permanent magnet housing hole, 104c: one side of permanent magnet housing hole, 105: core peripheral part, 106: rotating shaft, 106a: through hole, 107: stator slot, 108: magnetic pole, 109: stator, 110: stator core, 111: teeth, 120: rib, 120a: rib, 120b: rib, 120c: rib, 121: flux barrier, 121a: flux barrier, 121b: flux barrier, 130: magnetic pole central axis of permanent magnet, 201: rail, 202: stringing, 300: railroad vehicle, 301: wheel, 302: permanent magnet synchronous machine, 303: pantograph, 304: power converter.

**Claims**

1. A permanent magnet synchronous machine (100) comprising:

   a stator (109) equipped with a stator coil wound on a plurality of teeth (111); and
   a rotor (101) equipped with a plurality of permanent magnets (103) and a plurality of permanent magnet housing holes (104) for housing the permanent magnets (103) in a peripheral direction, the rotor (101) being provided with a plurality of magnetic poles (108) disposed along a peripheral direction,
   wherein the permanent magnet synchronous machine (100) is **characterized in that** a ratio $\tau m/\tau p$ of an open angle $\tau p$ of the magnetic pole (108) to an open angle $\tau m$ of the permanent magnet (103) satisfies the mathematical expression 1; and
   a reluctance torque ratio $\alpha$ defined by the mathematical expression 2 using stator coil interlinkage magnetic fluxes Wp by the permanent magnet (103), direct-axis inductance Ld, and quadrature-axis inductance Lq respectively when current I (Arms) is electrified is 0.60 or more,
   wherein a cross-section area of a core peripheral part (105) configured by outer sides in a diametric direction of the permanent magnet (103) and a peripheral end of the rotor (101) and cut by the open angle $\tau m$ of the permanent magnet (103) is made smaller than cross-section area of the permanent magnet housing hole (104),
   wherein the permanent magnet housing hole (104) and one side of the permanent magnet housing hole (104) extended in the peripheral direction are perpendicular to a magnetic pole central axis (130) of the permanent magnet (103) configuring one pole,
   **characterized in that**
   the permanent magnet (103) is arranged in a state in which the permanent magnet (103) is divided into a plurality of pieces in the circumferential direction
   [Mathematical expression 1]

$$0.5 \leq \frac{\tau_m}{\tau_p} \leq 0.63 \qquad \cdots (1)$$

   [Mathematical expression 2]

$$\alpha = \frac{L_q - L_d}{\Psi_p} \cdot \frac{I_{rms}}{\sqrt{2}} \qquad \cdots (2)$$

2. The permanent magnet synchronous machine (100) according to Claim 1,
   wherein the permanent magnet (103) is formed in a flat plate.

3. The permanent magnet synchronous machine (100) according to Claim 1,
   wherein each permanent magnet housing hole (104) has a rectangular parallelepiped shape.

4. The permanent magnet synchronous machine (100) according to any of Claims 1 to 3,
   wherein residual magnetic flux density of the permanent magnet (103) is 0.6 T or more.

5. The permanent magnet synchronous machine (100) according to Claim 4,
   wherein the permanent magnet (103) is a neodymium magnet.

6. An electric motor vehicle comprising:

   a plurality of wheels (301);
   a permanent magnet synchronous machine (100) that drives at least one wheel (301) out of the plurality of wheels (301); and

a power converter (304) that converts electric power and supplies ac power to the permanent magnet synchronous machine (100), the vehicle including the permanent magnet synchronous machine (100) according to Claim 1.

7. The electric motor vehicle according to Claim 6, comprising a pantograph (303) that collects electric power from stringing (202),
wherein the power converter (304) converts electric power collected by the pantograph (303).

8. The electric motor vehicle according to Claim 6, comprising a battery,
wherein the power converter (304) converts electric power supplied from the battery.


**Patentansprüche**

1. Permanentmagnetsynchronmaschine (100), umfassend:

einen Stator (109), der mit einer Statorspule ausgestattet ist, die auf eine Mehrzahl von Zähnen (111) gewickelt ist; und
einen Rotor (101), der mit einer Mehrzahl von Permanentmagneten (103) und einer Mehrzahl von Permanentmagnetaufnahmelöchern (104) zum Aufnehmen der Permanentmagnete (103) in einer Umfangsrichtung ausgestattet ist, wobei der Rotor (101) mit einer Mehrzahl von Magnetpolen (108) versehen ist, die entlang einer Umfangsrichtung angeordnet sind,
wobei die Permanentmagnetsynchronmaschine (100) **dadurch gekennzeichnet ist, dass** ein Verhältnis $\tau m/\tau p$ eines Öffnungswinkels $\tau p$ des Magnetpols (108) zu einem Öffnungswinkel $\tau m$ des Permanentmagneten (103) den mathematischen Ausdruck 1 erfüllt; und
ein Reluktanzdrehmomentverhältnis $\alpha$, das durch den mathematischen Ausdruck 2 unter Verwendung von Statorspulenverkettungsmagnetflüssen Wp durch den Permanentmagneten (103), einer Direktachseninduktivität Ld bzw. einer Quadraturachseninduktivität Lq definiert ist, wenn der Strom I (Arms) elektrifiziert wird, 0,60 oder mehr beträgt,
wobei eine Querschnittsfläche eines Kernumfangsteils (105), der durch Außenseiten in einer diametralen Richtung des Permanentmagneten (103) und ein Umfangsende des Rotors (101) konfiguriert ist und durch den Öffnungswinkel $\tau m$ des Permanentmagneten (103) geschnitten ist, kleiner als eine Querschnittsfläche des Permanentmagnetaufnahmelochs (104) gemacht ist,
wobei das Permanentmagnetaufnahmeloch (104) und eine Seite des Permanentmagnetaufnahmelochs (104), die sich in der Umfangsrichtung erstreckt, senkrecht zu einer Magnetpolmittelachse (130) des Permanentmagneten (103) sind, die einen Pol konfiguriert,
**dadurch gekennzeichnet, dass**
der Permanentmagnet (103) in einem Zustand angeordnet ist, in dem der Permanentmagnet (103) in der Umfangsrichtung in eine Mehrzahl von Teilen geteilt ist.
[Mathematischer Ausdruck 1]

$$0.5 \le \frac{\tau_m}{\tau_p} \le 0.63 \qquad \cdots (1)$$

[Mathematischer Ausdruck 2]

$$\alpha = \frac{L_q - L_d}{\Psi_p} \cdot \frac{I_{rms}}{\sqrt{2}} \qquad \cdots (2)$$

2. Permanentmagnetsynchronmaschine (100) nach Anspruch 1,
wobei der Permanentmagnet (103) in einer flachen Platte ausgebildet ist.

3. Permanentmagnetsynchronmaschine (100) nach Anspruch 1,
wobei jedes Permanentmagnetaufnahmeloch (104) eine rechteckige Parallelepipedform aufweist.

**4.** Permanentmagnetsynchronmaschine (100) nach einem der Ansprüche 1 bis 3,
wobei eine Restmagnetflussdichte des Permanentmagneten (103) 0,6 T oder mehr beträgt.

**5.** Permanentmagnetsynchronmaschine (100) nach Anspruch 4,
wobei der Permanentmagnet (103) ein Neodymmagnet ist.

**6.** Elektrisches Kraftfahrzeug, umfassend:

eine Mehrzahl von Rädern (301);
eine Permanentmagnetsynchronmaschine (100), die mindestens ein Rad (301) aus der Mehrzahl von Rädern (301) antreibt; und
einen Leistungswandler (304), der elektrische Leistung umwandelt und Wechselstromleistung an die Permanentmagnetsynchronmaschine (100) liefert, wobei das Fahrzeug die Permanentmagnetsynchronmaschine (100) nach Anspruch 1 beinhaltet.

**7.** Elektrisches Kraftfahrzeug nach Anspruch 6, umfassend einen Stromabnehmer (303), der elektrische Leistung von der Bespannung (202) sammelt,
wobei der Leistungswandler (304) elektrische Leistung umwandelt, die durch den Stromabnehmer (303) gesammelt wird.

**8.** Elektrisches Kraftfahrzeug nach Anspruch 6, umfassend eine Batterie,
wobei der Leistungswandler (304) elektrische Leistung umwandelt, die von der Batterie geliefert wird.

**Revendications**

**1.** Machine synchrone à aimants permanents (100) comprenant :

un stator (109) équipé d'une bobine de stator enroulée sur une pluralité de dents (111); et
un rotor (101) équipé d'une pluralité d'aimants permanents (103) et d'une pluralité de trous de logement d'aimants permanents (104) pour loger les aimants permanents (103) dans une direction périphérique, le rotor (101) étant pourvu d'une pluralité de pôles magnétiques (108) disposés le long d'une direction périphérique,
dans laquelle la machine synchrone à aimants permanents (100) est **caractérisée en ce qu'**un rapport $\tau m/\tau p$ d'un angle ouvert $\tau p$ du pôle magnétique (108) sur un angle ouvert $\tau m$ de l'aimant permanent (103) satisfait l'expression mathématique 1; et
un rapport de couple de réluctance $\alpha$ défini par l'expression mathématique 2 en utilisant des flux magnétiques d'interconnexion de bobine de stator Wp par l'aimant permanent (103), une inductance d'axe direct Ld, et une inductance d'axe en quadrature Lq respectivement lorsque le courant I (Arms) est électrifié est de 0,60 ou plus,
dans laquelle une section transversale d'une partie périphérique de noyau (105) configurée par des côtés externes dans une direction diamétrale de l'aimant permanent (103) et une extrémité périphérique du rotor (101) et coupée par l'angle ouvert $\tau m$ de l'aimant permanent (103) est rendue plus petite qu'une section transversale du trou de logement d'aimant permanent (104),
dans laquelle le trou de logement d'aimant permanent (104) et un côté du trou de logement d'aimant permanent (104) étendu dans la direction périphérique sont perpendiculaires à un axe central de pôle magnétique (130) de l'aimant permanent (103) configurant un pôle,
**caractérisée en ce que**
l'aimant permanent (103) est agencé dans un état dans lequel l'aimant permanent (103) est divisé en une pluralité de pièces dans la direction circonférentielle.
[Expression mathématique 1]

$$0.5 \leq \frac{\tau_m}{\tau_p} \leq 0.63 \qquad \cdots (1)$$

[Expression mathématique 2]

$$\alpha = \frac{L_q - L_d}{\Psi_p} \cdot \frac{I_{rms}}{\sqrt{2}} \qquad \cdots (2)$$

2. Machine synchrone à aimants permanents (100) selon la revendication 1,
   dans laquelle l'aimant permanent (103) est formé dans une plaque plate.

3. Machine synchrone à aimants permanents (100) selon la revendication 1,
   dans laquelle chaque trou de logement d'aimant permanent (104) a une forme parallélépipédique rectangulaire.

4. Machine synchrone à aimants permanents (100) selon l'une quelconque des revendications 1 à 3,
   dans laquelle une densité de flux magnétique résiduel de l'aimant permanent (103) est de 0,6 T ou plus.

5. Machine synchrone à aimants permanents (100) selon la revendication 4,
   dans laquelle l'aimant permanent (103) est un aimant au néodyme.

6. Véhicule à moteur électrique comprenant :

   une pluralité de roues (301) ;
   une machine synchrone à aimants permanents (100) qui entraîne au moins une roue (301) parmi la pluralité
   de roues (301) ; et
   un convertisseur de puissance (304) qui convertit la puissance électrique et fournit une puissance alternative
   à la machine synchrone à aimants permanents (100), le véhicule comprenant la machine synchrone à aimants
   permanents (100) selon la revendication 1.

7. Véhicule à moteur électrique selon la revendication 6, comprenant un pantographe (303) qui collecte la puissance
   électrique à partir d'une corde (202),
   dans lequel le convertisseur de puissance (304) convertit la puissance électrique collectée par le pantographe (303).

8. Véhicule à moteur électrique selon la revendication 6, comprenant une batterie,
   dans lequel le convertisseur de puissance (304) convertit la puissance électrique fournie par la batterie.

# FIG. 1

## *FIG. 2*

## *FIG. 3*

$E_0$: UNLOADED INDUCED ELECTROMOTIVE FORCE

V : VOLTAGE

I : CURRENT

$\theta$ : VOLTAGE LOAD ANGLE

$\beta$ : CURRENT PHASE DIFFERENCE ANGLE

$\varphi$ : POWER FACTOR ANGLE

R : STATOR COIL RESISTANCE

$L_d$, $L_q$: d-AXIS AND q-AXIS INDUCTANCE

$\omega$ : FUNDAMENTAL WAVE ANGULAR FREQUENCY

# FIG. 4

TORQUE (Nm)  Me(OUTPUT TORQUE)

Mp(MAGNETIC TORQUE)

Mr(RELUCTANCE TORQUE)

Me, max
Mp, max

Mr, max

0  45  90

CURRENT PHASE
DIFFERENCE ANGLE $\beta$ (deg.)

# FIG. 5

RELUCTANCE TORQUE RATIO $\alpha$ (pu)

DIMENSION OF EXTRAPOLATED
INTERCEPT IS DIFFERENT FOR
EVERY MOTOR

0  0.2  0.4  0.6  0.8  1

$\tau m / \tau p$ (pu)

17

## FIG. 6

## FIG. 7

## FIG. 8

X-axis: RELUCTANCE TORQUE RATIO $\alpha$ (pu)

Y-axis: MAGNET OPEN ANGLE $\tau m / \tau p$ (pu) AT WHICH SUM OF MAGNETIC TORQUE AND RELUCTANCE TORQUE IS MAXIMUM

0.63

0.60

## FIG. 9

# FIG. 10

MAGNETIC POLE
CENTRAL AXIS

# FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015029421 A

- CN 105162301 A